# EUROPEAN PATENT SPECIFICATION

(11) **EP 4 122 975 B1**
(45) Date of publication and mention of the grant of the patent: **03.04.2024**
(21) Application number: 21792854.8
(22) Date of filing: 13.04.2021
(51) Int. Cl.: C08G 101/00, C08K 5/524, C08L 75/04, C08G 18/00, C08G 18/32, C08G 18/40, C08G 18/48, C08G 18/64, C08G 18/66, C08G 18/76, C08G 18/18, C08K 5/1545

(54) **POLYOL COMPOSITION FOR SOFT POLYURETHANE FOAM MOLDING, COMPOSITION FOR SOFT POLYURETHANE FOAM MOLDING, SOFT POLYURETHANE FOAM, AND PRODUCTION METHOD FOR SAME**
POLYOLZUSAMMENSETZUNG FÜR POLYURETHANWEICHSCHAUMSTOFFFORMKÖRPER, ZUSAMMENSETZUNG FÜR POLYURETHANWEICHSCHAUMSTOFFFORMKÖRPER, POLYURETHANWEICHSCHAUMSTOFF UND HERSTELLUNGSVERFAHREN DAFÜR
COMPOSITION DE POLYOL POUR MOULAGE DE MOUSSE DE POLYURÉTHANE SOUPLE, COMPOSITION POUR MOULAGE DE MOUSSE DE POLYURÉTHANE SOUPLE, MOUSSE DE POLYURÉTHANE SOUPLE ET SON PROCÉDÉ DE PRODUCTION

(30) Priority: 23.04.2020 JP 2020076560; 31.07.2020 JP 2020129860
(43) Date of publication of application: 25.01.2023
(73) Proprietor: Tosoh Corporation, Yamaguchi 746-8501 (JP)
(72) Inventor: ISHIBASHI, Keita, Ayase-shi, Kanagawa 252-1123 (JP); YOSHII, Naoya, Ayase-shi, Kanagawa 252-1123 (JP); YAMAMOTO, Junya, Yokkaichi-shi, Mie 510-8540 (JP)
(74) Representative: TBK
(86) International application number: PCT/JP2021/015345
(87) International publication number: WO 2021/215309

(56) References cited:
- WO-A1-00/73368
- WO-A1-2013/021871
- WO-A1-2020/129806
- JP-A- 2019 157 098

## Description

### Technical Field

The present invention relates to a polyol composition for forming flexible polyurethane foam, a composition for forming flexible polyurethane foam, a flexible polyurethane foam and a method of producing the same.

### Background Art

Flexible polyurethane foams are widely used in daily commodities, vehicle materials, clothing, sport/leisure products, medical materials, civil engineering, building materials, and the like. Among such fields of application, particularly, in applications of cushion materials such as vehicle seats and wheelchairs, it is required to reduce the hardness felt during initial compression when sitting, and a feeling of shakiness caused by lateral tilting of the occupant's waist, buttocks and the like when traveling on a curve in addition to functions required in the related art.

In order to address these problems, it is necessary to be able to maintain a more stable sitting posture by setting the hardness distribution so that the hardness is unlikely to be exhibited during initial compression of the flexible polyurethane foam and the hardness is likely to be exhibited during high compression. Various approaches have been made in the related art in order to exhibit such a hardness distribution.

For example, Patent Literature 1 discloses a seat cushion structure having a lamination structure in which a highly elastic polyurethane foam is disposed on an upper layer (seat side) and a viscoelastic foam is disposed on a lower layer (bottom side). Accordingly, the viscoelastic foam on the side of the lower layer indirectly applies a soft feeling of fitting to an occupant through the highly elastic foam on the side of the upper layer, and the highly elastic foam on the upper layer directly applies a feeling of cushioning to the occupant. However, this method has problems such as an increase in the number of parts and an increase in the number of steps for integrating a foamed component by adhesion or the like.

In addition, for example, Patent Literature 2 discloses a technique for exhibiting a hardness distribution by changing the density of each part of a seat. However, when the hardness is adjusted by changing the density, the density should be increased in order to increase the hardness, which leads to an increase in cost. In addition, it is necessary to perform molding for each part, and there is a problem of working hours increasing.

In addition, for example, Patent Literature 3 discloses a technique for exhibiting a hardness distribution at the same density when a main polymerizable group (reactive group) of a crosslinking agent component contained in a polyol composition is an ethylene oxide group, glycerin is contained, and the shape of a foaming cell is controlled (Patent Literature 3). However, these factors alone are insufficient for exhibiting a hardness distribution in which the hardness during initial compression felt when sitting is reduced and a feeling of shakiness is minimized.

### Citation List

### Patent Literature

[Patent Literature 1] Japanese Unexamined Utility Model Publication No. H6-19604
[Patent Literature 2] Japanese Unexamined Patent Publication No. 2002-300936
[Patent Literature 3] WO 2017/022824

### Summary of Invention

### Technical Problem

Incidentally, a polyol composition used for forming a flexible polyurethane foam may be exposed to a temperature significantly higher than room temperature (for example, 25°C) for a long time, such as when transported by ships. When the polyol composition is stored in such an environment, components in the composition react, which may cause a decrease in the reactivity of the composition and a decrease in the moldability of the flexible polyurethane foam.

The present invention has been made in view of the above circumstances, and a main object of the present invention is to provide a polyol composition for forming flexible polyurethane foam having excellent storage stability which allows a flexible polyurethane foam having a hardness distribution at which seating comfort becomes favorable when used as a cushion material to be formed, a composition including a first liquid composed of the polyol composition and a second liquid composed of a polyisocyanate composition, a flexible polyurethane foam obtained using the composition and a method of producing the same.

### Advantageous Effects of Invention

According to the present invention, it is possible to provide a polyol composition for forming flexible polyurethane foam having excellent storage stability which allows a flexible polyurethane foam having a hardness distribution at which seating comfort becomes favorable when used as a cushion material to be formed, a composition including a first liquid composed of the polyol composition and a second liquid composed of a polyisocyanate composition, a flexible polyurethane foam obtained using the composition and a method of producing the same.

### Description of Embodiments

In this specification, when a numerical range is indicated using "to," it means a range including numerical values stated before and after "to" as a minimum value and a maximum value. In the numerical ranges described in this specification, an upper limit value or a lower limit value in the numerical range may be replaced with values shown in examples. In addition, the upper limit value and the lower limit value described individually can be arbitrarily combined.

Hereinafter, one embodiment of the present invention will be described in detail. However, the present invention is not limited to the following embodiments.

### <Polyol composition>

A polyol composition of one embodiment is a polyol composition used for forming (for example, molding) a flexible polyurethane foam. The polyol composition contains a polyol component, a catalyst, a foam stabilizer, a foaming agent and a crosslinking agent, contains water as the foaming agent and contains a sugar alcohol as the crosslinking agent, and the content of the sugar alcohol with respect to 100 parts by mass of the polyol component is 0.1 to 5.0 parts by mass. The polyol composition is a one-component composition, in which a polyol component, a catalyst, a foam stabilizer, a foaming agent and a crosslinking agent are mixed. Here, in this specification, the polyol component is a high-molecular-weight polyol compound having a number average molecular weight of 2,500 or more among polyol compounds having a plurality of hydroxy groups. A polyol compound having a number average molecular weight of less than 2,500 is classified as a crosslinking agent.

According to the polyol composition having the above configuration, it is possible to mold a flexible polyurethane foam having a hardness distribution at which seating comfort becomes favorable when used as a cushion material. Specifically, for example, it is possible to mold a flexible polyurethane foam in which, when the seat side is set as the upper side, the length from the end surface of the upper side to the end surface of the lower side is set as the thickness of the flexible polyurethane foam, two foams having a thickness that is 45% of the thickness of the flexible polyurethane foam are cut out by cutting the flexible polyurethane foam at positions where the length from the end surface of the upper side in the thickness direction is 45% and 90% of the thickness of the flexible polyurethane foam along a plane perpendicular to the thickness direction, and an average value of the 25% compressive hardnesses of the two cut-out foams is set as 100, the ratio of the 25% compressive hardness of the foam on the upper side between the two foams with respect to the average value is 50 to 85.

Incidentally, as the urethanization catalyst, for example, a divalent tin catalyst such as stannous octoate is known. As a result of examination by the inventors, it has been clarified that, if these divalent tin catalysts are used, for example, when the polyol composition is exposed to a high temperature environment for a long time, the reactivity of the polyol composition and the moldability of the flexible polyurethane foam deteriorate. On the other hand, since the polyol composition of the present embodiment contains no divalent tin catalyst, even if it is exposed to a high temperature environment for a long time, the reactivity of the polyol composition and the moldability of the flexible polyurethane foam are unlikely to deteriorate. That is, the polyol composition of the present embodiment has excellent storage stability.

Hereinafter, components contained in the polyol composition will be described.

### (Polyol component)

The polyol component is a component that is poly-added with a polyisocyanate component to form a polyurethane. As the polyol component, at least one selected from the group consisting of polyether polyols and polyester polyols is preferably used so that it is easy to adjust the nominal functional group number, the number average molecular weight or the like, and wide ranges of hardness and elastic moduli are obtained. The polyol components may be used alone or a plurality thereof may be used in combination.

As the polyether polyol, for example, polypropylene ether polyol, polyethylene polypropylene ether polyol (polyoxyethylene polyoxypropylene polyol), polytetramethylene ether glycol (PTG) and the like can be used.

As the polyester polyol, for example, a polycondensation type polyester-based polyol, a lactone-based polyester polyol and the like can be used. As the polycondensation type polyester-based polyol, for example, a polyester polyol which is a copolymer of adipic acid and a diol can be used. As the lactone-based polyester polyol, for example, polycaprolactone polyol can be used.

In order to promote foam breakage of the flexible polyurethane foam, the polyol component preferably contains a polyether polyol having a polyoxyalkylene chain containing an oxyethylene unit and an oxypropylene unit as constituent units (for example, a polyoxyalkylene chain composed of a copolymer of oxyethylene and oxypropylene), and more preferably contains a polyethylene polypropylene ether polyol. The nominal functional group number of such a polyol is preferably 2 to 4. In addition, in consideration of storage stability at a low temperature, it is preferable that oxyethylene units and oxypropylene units be randomly arranged (for example, the copolymer of oxyethylene and oxypropylene is a random copolymer).

The polyol component preferably contains a polyether polyol containing an oxyethylene unit as a main constituent unit so that a hardness distribution of the flexible polyurethane foam can be easily obtained and the durability can be further improved. The content of the oxyethylene units in the polyether polyol containing the oxyethylene units as main constituent units exceeds 50 mass%, is preferably 60 to 90 mass%, and more preferably 60 to 80 mass%.

The content of the polyether polyol containing an oxyethylene unit as a main constituent unit with respect to a total amount of the polyol component may be 0.5 mass% or more so that the moldability of the flexible polyurethane foam can be improved and an effect of improving the durability can be easily obtained. The content of the polyether polyol containing an oxyethylene unit as a main constituent unit with respect to a total amount of the polyol component may be 5.0 mass% or less so that a decrease in the elongation rate of the flexible polyurethane foam can be minimized and an effect of improving the durability can be easily obtained. In this regard, the content of the polyether polyol containing an oxyethylene unit as a main constituent unit with respect to a total amount of the polyol component is preferably 0.5 to 5.0 mass%.

The total unsaturation degree of the polyether polyol may be 0.04 meq./g or less in order to further improve the durability of the flexible polyurethane foam. Increasing the total unsaturation degree of the polyether polyol means that the amount of monool components having an unsaturated group at the terminal increases. When the total unsaturation degree is 0.04 meq./g or less, the crosslinking density of the flexible polyurethane foam is likely to be sufficient, and sufficient durability is easily obtained. The total unsaturation degree is 0 meq./g or more, and may be, for example, 0.001 meq./g or more. Polyether polyols having a total unsaturation degree of 0.001 meq./g or more are readily available. In this regard, the total unsaturation degree of the polyether polyol may be, for example, 0.001 to 0.04 meq./g. A polyether polyol having the above total unsaturation degree can be easily obtained using, for example, at least one selected from among a composite metal cyanide complex catalyst, a phosphazene catalyst and an imino group-containing phosphazenium salt as a polymerization catalyst (a polymerization catalyst for an alkylene oxide such as ethylene oxide or propylene oxide) when a polyether polyol is produced.

The number average molecular weight of the polyol component is 3,500 or more so that a flexible polyurethane foam having sufficient flexibility can be easily obtained. The number average molecular weight of the polyol component may be 10,000 or less so that a flexible polyurethane foam having a sufficient hardness can be easily obtained. In this regard, the number average molecular weight of the polyol component is, for example, 3,500 to 10,000.

The nominal functional group number of the polyol component may be 2 or more so that the compression set under humid conditions, which is an index of durability, becomes favorable. The nominal functional group number of the polyol component may be 4 or less so that a flexible polyurethane foam having sufficient flexibility can be easily obtained. In this regard, the nominal functional group number is preferably 2 to 4. When the polyol component contains a plurality of polyol compounds, it is preferable that the nominal functional group number of at least one polyol compound be within the above range, and it is preferable that the nominal functional group numbers of all polyol compounds be within the above range. Here, the nominal functional group number indicates the theoretical average number of functional groups (the number of active hydrogen atoms per molecule) when it is assumed that no side reaction occurs during the polymerization reaction of the polyol.

In view of this, the polyol component preferably contains a polyether polyol or polyester polyol which has a number average molecular weight of 3,500 to 10.000 and has a nominal functional group number of 2 or more.

In order to adjust the hardness, as the polyol component, a polymer polyol obtained by polymerizing vinyl-based monomer in the polyol may be used. A method of polymerizing vinyl-based monomers may be a usual method (for example, a radical polymerization method). Examples of such polymer polyols include those obtained by polymerizing and stably dispersing vinyl-based monomers in the presence of a radical initiator in polyether polyols such as the polyethylene polypropylene ether polyol. In addition, examples of vinyl-based monomers include acrylonitrile, styrene, vinylidene chloride, hydroxyalkyl methacrylates, and alkyl methacrylates. Among these, acrylonitrile and styrene are preferable. Examples of such polymer polyols include EL-910 and EL-923 (product name, commercially available from AGC Co., Ltd.), and FA-728R (product name, commercially available from Sanyo Chemical Industries, Ltd.).

### (Catalyst)

As the catalyst, a catalyst other than the divalent tin catalyst selected from among various urethanization catalysts known in the art can be used. Examples of catalysts include tertiary amine catalysts such as triethylamine, tripropylamine, tributylamine, N-methylmorpholine, N-ethylmorpholine, dimethylbenzylamine, N,N,N',N'-tetramethylhexamethylenediamine, N,N,N' ,N' ,N"-pentamethyldiethylenetriamine, bis-(2-dimethylaminoethyl)ether, triethylenediamine, 1,8-diazabicyclo [5.4.0]undecene-7, and 1,2-dimethylimidazole, and their organic acid salts, and organometallic compounds such as zinc naphthenate (excluding divalent tin catalysts). These may be used alone or a plurality thereof may be used in combination.

As the catalyst, a tertiary amine catalyst is preferably used so that the effects of the present invention can be easily obtained. As the tertiary amine catalyst, a tertiary amine catalyst having active hydrogen such as N,N-dimethylethanolamine, N,N-diethylethanolamine, N,N-dimethyl-N-hexanolamine, 2-hydroxymethyltriethylenediamine, and N,N,N'-trimethyl-N'-hydroxyethyl-bisaminoethyl ether (for example, a tertiary amine catalyst having a hydroxy group) is preferably used because it reacts with an isocyanate and is incorporated into a urethane resin and thus no amine emission occurs.

The content of the catalyst with respect to 100 parts by mass of the polyol component is preferably 0.01 to 10 parts by mass. When the content of the catalyst is 0.01 parts by mass or more, sufficient curing is more likely to occur, and when the content of the catalyst is 10 parts by mass or less, better moldability is easily obtained. In this regard, the content of the catalyst with respect to 100 parts by mass of the polyol component may be 0.1 parts by mass or more, 0.3 parts by mass or more or 0.5 parts by mass or more, and may be 5.0 parts by mass or less, 3.0 parts by mass or less or 1.0 part by mass or less.

### (Foam stabilizer)

The foam stabilizer is, for example, a surfactant. As the surfactant, an organic silicon-based (for example, silicon-based) surfactant can be suitably used. Specific examples of foam stabilizers include SZ-1327, SZ-1325, SZ-1336, and SZ-3601 (commercially available from Dow Toray Co., Ltd.), Y-10366 and L-5309 (commercially available from Momentive Performance Materials), and B-8724LF2 and B-8715LF2 (commercially available from Evonik Industries). The foam stabilizers may be used alone or a plurality thereof may be used in combination.

The content of the foam stabilizer with respect to 100 parts by mass of the polyol component is preferably 0.1 to 3.0 parts by mass. When the content of the foam stabilizer is 0.1 parts by mass or more, bubbles (cells) are easily made uniform, and when the content of the foam stabilizer is 3.0 parts by mass or less, a flexible polyurethane foam having favorable physical properties can be easily obtained. In this regard, the content of the foam stabilizer with respect to 100 parts by mass of the polyol component may be 0.3 parts by mass or more or 0.5 parts by mass or more, and may be 2.0 parts by mass or less or 1.0 part by mass or less.

### (Foaming agent)

The polyol composition contains water as a foaming agent. Since water reacts with an isocyanate group to form a urea group having a high hardness and generates carbon dioxide gas, a mixed solution can be foamed when the polyol composition is mixed with an isocyanate composition.

The content of water with respect to a total amount of the foaming agent exceeds, for example, 50 mass%, and may be 70 mass% or more or 90 mass% or more, and may be 100 mass%. The content of water with respect to a total amount of the foaming agent may be 100 mass% or less.

The polyol composition may contain, as the foaming agent, any foaming agent in addition to water. For example, a small amount of a low-boiling-point organic compound such as cyclopentane or isopentane may be used in combination with water. For example, air, nitrogen gas, liquefied carbon dioxide or the like can be mixed and dissolved in the mixed solution using a gas loading device to foam the mixed solution.

The content of the foaming agent with respect to a total amount of the polyol composition may be 0.5 to 10 mass%. When the content of the foaming agent is 10 mass% or less, a stable foam can be easily obtained, and when the content of the foaming agent is 0.5 mass% or more, a low-density foamed component can be easily obtained. When a low-density flexible polyurethane foam having an apparent density of less than 40 kg/m³ is obtained, the content of the foaming agent with respect to a total amount of the polyol composition is preferably 3.0 to 6.0 mass% and more preferably 3.0 to 5.5 mass%.

### (Crosslinking agent)

The crosslinking agent is a compound that reacts with an isocyanate component to form a cross-linked structure when a polyol component is poly-added with an isocyanate component to form a polyurethane, and has, for example, a reactive group (for example, a hydroxy group) having reactivity with respect to the isocyanate component. The crosslinking agent is, for example, a low-molecular-weight compound having a number average molecular weight of less than 2,500 (for example, a polyol compound).

The polyol composition contains a sugar alcohol as a crosslinking agent. The sugar alcohol is a type of sugar produced by reducing the carbonyl group of saccharides such as aldose and ketose. Examples of sugar alcohols include monosaccharide alcohols, disaccharide alcohols, and oligosaccharide alcohols.

Examples of monosaccharide alcohols include tetritols such as erythritol and threitol; pentitols such as arabitol, xylitol, and ribitol; hexitols such as sorbitol, mannitol, and galactitol; heptitols such as volemitol; octitols such as D-erythro-D-galacto-octitol; nonitols; and decitols. There is no limitation on the configuration of these sugar alcohols, and the sugar alcohol may be a D-form or an L-form or may be a DL-form which is a mixture of a D-form and an L-form.

Examples of disaccharide alcohols include maltitol, lactitol, and palatinit.

Oligosaccharide alcohols are saccharide alcohols with three or more monosaccharides, and for example, trisaccharide alcohols to decasaccharide alcohols (trisaccharide alcohols, tetrasaccharide alcohols, pentasaccharide alcohols, hexasaccharide alcohols, heptasaccharide alcohols, octasaccharide alcohols, nonasaccharide alcohols and decasaccharide alcohols) are classified as oligosaccharide alcohols. The oligosaccharide alcohols are roughly classified into homooligosaccharide alcohols in which 3 or more molecules (for example, 3 to 10 molecules) of one type of monosaccharide alcohol alone are dehydrated and condensed via a glycoside bond and heterooligosaccharide alcohols in which at least two types of 3 or more molecules (for example, 3 to 10 molecules) of monosaccharides and/or sugar alcohols (where at least one type is a sugar alcohol) are dehydrated and condensed via a glycoside bond.

The oligosaccharide alcohol may have a cyclic structure, and may be anhydrous or hydrated. Examples of oligosaccharide alcohols include maltotriitol, maltotetraitol, maltopentaitol, and maltohexaitol.

These monosaccharide alcohols, disaccharide alcohols and oligosaccharide alcohols can be used alone or a plurality thereof can be used in combination. The sugar alcohol is preferably used in a liquid state at room temperature as a mixture with hydrophilic polyols such as ethylene glycol, diethylene glycol, and glycerin and/or water. In addition, various reduced starch syrups (sugar alcohol mixture) can be used.

In order to improve the miscibility with other components constituting the polyol composition and the like, the monosaccharide alcohols, disaccharide alcohols, oligosaccharide alcohols and mixtures thereof may be those in which some of the hydroxyl groups thereof are ether-modified or ester-modified (ether-modified component or ester-modified component). However, the modification rate of the hydroxy group is preferably 30 mol% or less (0 to 30 mol%) of all hydroxy groups so that the effects of the present invention can be significantly obtained.

The sugar alcohol preferably contains at least one selected from among monosaccharide alcohols to decasaccharide alcohols, and more preferably contains at least one selected from among monosaccharide alcohols to hexasaccharide alcohols.

The sugar alcohol particularly preferably contains a monosaccharide alcohol because this improves storage stability (storage stability in an environment exposed to a temperature significantly higher than room temperature for a long time, for example, when the polyol composition is transported by ships). In order to obtain such significant effects, the content of the monosaccharide alcohol with respect to a total amount of the sugar alcohol is preferably 90 mass% or more, and more preferably 95 mass% or more. The content of the monosaccharide alcohol with respect to a total amount of the sugar alcohol may be 100 mass%. That is, the content of the monosaccharide alcohol with respect to a total amount of the sugar alcohol may be 90 to 100 mass% or 95 to 100 mass%.

In the sugar alcohol, as long as the storage stability of the polyol composition is not influenced, sugars other than sugar alcohols may be used in combination or may be bound thereto. Examples of sugars other than sugar alcohols include monosaccharides, disaccharides, and oligosaccharides (for example, trisaccharides to decasaccharides).

The number average molecular weight of the sugar alcohol is 120 or more and less than 2,500. The number average molecular weight of the sugar alcohol is preferably 120 or more and 2,100 or less. When the number average molecular weight of the sugar alcohol is 120 or more, the hardness distribution tends to be easily exhibited, and when the number average molecular weight of the sugar alcohol is 2,100 or less, the moldability and elongation rate of the flexible polyurethane foam tend to be improved. The number average molecular weight of the sugar alcohol can be measured, for example, using a calibration curve of standard polystyrene through gel permeation chromatography (GPC).

The content of the sugar alcohol with respect to 100 parts by mass of the polyol component is 0.1 to 5.0 parts by mass. The polyol composition of the present embodiment exhibits a favorable hardness distribution when the content of the sugar alcohol is within the above range. The content of the sugar alcohol with respect to 100 parts by mass of the polyol component is preferably 0.3 parts by mass or more and may be 0.6 parts by mass or more, 1.0 part by mass or more, 1.5 parts by mass or more, 2.0 parts by mass or more, 3.0 parts by mass or more or 4.0 parts by mass or more because this tends to improve the hardness distribution of the flexible polyurethane foam. The content of the sugar alcohol with respect to 100 parts by mass of the polyol component is preferably 4.0 parts by mass or less, and may be 3.0 parts by mass or less or 2.0 parts by mass or less because this improves the moldability and elongation rate of the flexible polyurethane foam.

In order to further improve physical properties of the foam such as the elongation rate and the compression set under humid conditions, the polyol composition preferably contains at least one cyclic glycol selected from the group (hereinafter simply referred to as "cyclic glycol") consisting of alicyclic glycols and aromatic glycols as a crosslinking agent component other than the sugar alcohol.

Cyclic glycols have a ring structure in the compound. Examples of cyclic glycols include cyclohexanediol, cyclohexanedimethanol, hydroquinone bis(2-hydroxyethyl) ether, dihydroxydiphenylmethane, bisphenol A hydride, polyoxyethylene bisphenol ether, and polyoxypropylene bisphenol ether. Among these, 1,4-cyclohexanedimethanol and polyoxyethylene bisphenol A ether are preferable because they strengthen an effect of improving the compression set under humid conditions of the obtained flexible polyurethane foam. These cyclic glycols may be used alone or a plurality thereof may be used in combination.

In order to further improve physical properties of the foam such as the elongation rate and the compression set under humid conditions, the content of the cyclic glycol with respect to 100 parts by mass of the polyol component is preferably 0.5 parts by mass or more, more preferably 1.0 part by mass or more, and still more preferably 1.5 parts by mass or more. In order for the 25% compressive hardness to be easily adjusted within a desired range, the content of the cyclic glycol with respect to 100 parts by mass of the polyol component is preferably 8.0 parts by mass or less, more preferably 6.0 parts by mass or less, and still more preferably 4.0 parts by mass or less. In this regard, the content of the cyclic glycol with respect to 100 parts by mass of the polyol component may be 0.5 to 8.0 parts by mass, 1.0 to 6.0 parts by mass, 1.5 to 8.0 parts by mass, 1.5 to 6.0 parts by mass or 1.5 to 4.0 parts by mass.

In order to achieve both a favorable hardness distribution and moldability, the content of the crosslinking agent with respect to 100 parts by mass of the polyol component is preferably 0.5 to 7.0 parts by mass. In this regard, the content of the crosslinking agent with respect to 100 parts by mass of the polyol component may be 1.0 part by mass or more or 2.0 parts by mass or more, and may be 5.0 parts by mass or less or 3.0 parts by mass or less.

### (Other components)

The polyol composition may further contain components (other components) other than the above components. The polyol composition may further contain, for example, an antioxidant. When the polyol composition contains an antioxidant, it tends to be able to reduce the volatilizing amount of aldehydes generated during and after forming of the flexible polyurethane foam.

Examples of antioxidants include phosphite-based antioxidants, hindered phenol-based antioxidants, thioether-based antioxidants, and hindered amine-based antioxidants. Among these, it is preferable to use a phosphite-based antioxidant in order to further reduce the volatilizing amount of aldehydes. The antioxidants may be used alone or a plurality thereof may be used in combination. For example, a phosphite-based antioxidant can be used in combination with a hindered phenol-based antioxidant, a thioether-based antioxidant, a hindered amine-based antioxidant and the like.

The phosphite-based antioxidant may be an inorganic compound or an organic compound. The number average molecular weight of the phosphite-based antioxidant is preferably 500 or more. When a phosphite-based antioxidant having a number average molecular weight of 500 or more is used, it is possible to more effectively restrict volatilization of aldehydes generated from the flexible polyurethane foam. In order to obtain such an effect more significantly, the number average molecular weight of the phosphite-based antioxidant may be 750 or more or 1,000 or more. The number average molecular weight of the phosphite-based antioxidant may be 3,000 or less, 2,000 or less or 1,500 or less because it is possible to secure the phosphorus concentration and an effect of reducing the volatilizing amount of aldehydes can be easily obtained. When a phosphite-based antioxidant having a number average molecular weight of 500 or more is used as the phosphite-based antioxidant, a phosphite-based antioxidant having a number average molecular weight of less than 500 may be used in combination, but in order to prevent the antioxidant itself from volatilizing, preferably, a phosphite-based antioxidant having a number average molecular weight of less than 500 is not used.

Examples of preferable phosphite-based antioxidants include inorganic phosphates such as monosodium phosphate, disodium phosphate, trisodium phosphate, sodium phosphite, calcium phosphite, magnesium phosphite, manganese phosphite, sodium hypophosphite, calcium hypophosphite, and potassium hypophosphite, and organophosphorus compounds such as triphenylphosphite, trioctadecylphosphite, tridecylphosphite, trinonylphenylphosphite, diphenylisodecyl phosphite, bis(2,6-di-tert-butyl-4-methylphenyl)pentaerythritol diphosphite, bis(2,4-di-tert-butylphenyl)pentaerythritol diphosphite, tris(2,4-di-tert-butylphenyl)phosphite, distearyl pentaerythritol diphosphite, tetra(tridecylic-4,4'-isopropylidene diphenyldiphosphite, and 2,2-methylenebis(4,6-di-tert-butylphenyl)octylphosphite. These can be used alone or used in a mixture. Among these, ADK STAB 1500 and ADK STAB 3010 (both are product name, commercially available from ADEKA Corporation) can be suitably used.

The content of the antioxidant (for example, the content of the phosphite-based antioxidant) with respect to 100 parts by mass of the polyol component is preferably 0.02 to 0.10 parts by mass and more preferably 0.03 to 0.08 parts by mass in order to further reduce the volatilizing amount of aldehydes.

The antioxidant may not be included in the polyol composition. In this case, as will be described below, the antioxidant may be contained in the isocyanate composition used in a mixture with a polyol composition.

The polyol composition may further contain various known additives and auxiliary agents, for example, a filling agent such as calcium carbonate and barium sulphate, a flame retardant, a plasticizer, a coloring agent, and an antifungal agent. These can be used as necessary.

### <Composition for forming flexible polyurethane foam>

A composition for forming flexible polyurethane foam of one embodiment is, for example, a two-component composition, and contains a first liquid composed of the polyol composition of the above embodiment and a second liquid composed of an isocyanate composition containing a polyisocyanate component. The first liquid and the second liquid in the composition for forming flexible polyurethane foam are stored separately, and mixed when ready for use.

The polyisocyanate component is a compound having a plurality of isocyanate groups. As the polyisocyanate component, at least one selected from the group consisting of diphenylmethane diisocyanate (MDI) and polyphenylene polymethylene polyisocyanate (P-MDI) is preferably used. As the polyisocyanate component, in addition to a mixture of MDI and P-MDI, various modified components such as a urethane-modified component, urea-modified component, allophanate-modified component, nurate-modified component, and biuret-modified component of MDI or P-MDI can be used. The polyisocyanate components may be used alone or a plurality thereof may be used in combination.

In MDI, there are three types of isomers: 4,4'-diphenylmethane diisocyanate (4,4'-MDI), 2,4'-diphenylmethane diisocyanate (2,4'-MDI) and 2,2'-diphenylmethane diisocyanate (2,2'-MDI), and as MDI, one of these may be used alone or a plurality thereof may be used in combination.

The MDI content in the polyisocyanate component is preferably 50 to 85 mass%. Here, the MDI content can be referred to as the content of diphenylmethane diisocyanate with respect to a total amount of the polyisocyanate component. When the MDI content is 85 mass% or less, the storage stability of the isocyanate composition (second liquid) at a low temperature and the durability of the obtained flexible polyurethane foam tend to be improved. In addition, when the MDI content is 50 mass% or more, a decrease in elongation of the flexible polyurethane foam due to an increase in the crosslinking density is unlikely to occur, and it is easy to obtain a sufficient foam strength. In this regard, the MDI content may be 60 mass% or more or 70 mass% or more, and may be 80 mass% or less.

A total amount of 2,2'-diphenylmethane diisocyanate (2,2'-MDI) and 2,4'-diphenylmethane diisocyanate (2,4'-MDI) with respect to a total amount of diphenylmethane diisocyanate (MDI) is preferably 10 to 50 mass%. In other words, the isomer content in MDI (a sum of the content of 2,2'-MDI and the content of 2,4'-MDI based on a total amount of MDI) is preferably 10 to 50 mass%. When the isomer content is 10 mass% or more, the storage stability of the isocyanate composition (second liquid) at a low temperature tends to be improved, and there is no need to constantly heat isocyanate storage locations, pipes, and the inside of a foam molding machine. In addition, the molding stability of the flexible polyurethane foam is improved, and the occurrence of foam disintegration during foaming tends to be minimized. In addition, when the isomer content is 50 mass% or less, the reactivity is improved, the molding cycle is extended, the single foam rate of the foam increases, and problems such as contraction after molding are unlikely to occur.

The isocyanate composition may contain components (excluding the polyol component) described as components that can be contained in the polyol composition of the above embodiment. Among the components that can be contained in the polyol composition, the phosphite-based antioxidant is preferably contained in the isocyanate composition.

When the antioxidant is contained in the isocyanate composition, the content of the antioxidant (for example, the content of the phosphite-based antioxidant) with respect to 100 parts by mass of the polyisocyanate component is preferably 0.01 to 0.30 parts by mass, and more preferably 0.02 to 0.28 parts by mass.

Regarding the content of the phosphite-based antioxidant, in order to easily obtain an effect of reducing the volatilizing amount of aldehydes, the content of the phosphite-based antioxidant in the mixed solution obtained when the first liquid and the second liquid are mixed so that the NCO index is 95 is preferably 50 to 1,100 ppm by mass with respect to a total amount of the mixed solution. In order to obtain an effect of reducing the volatilizing amount of aldehydes more significantly, the content may be 100 ppm by mass or more, 200 ppm by mass or more, 300 ppm by mass or more, 400 ppm by mass or more, 500 ppm by mass or more or 600 ppm by mass or more, and may be 800 ppm by mass or less. The content is more preferably 100 to 800 ppm by mass. Here, the NCO index is a percentage (NCO group/active hydrogen group×100) of the number of moles of all isocyanate groups (NCO groups) in the isocyanate group-containing compound with respect to the number of moles of all active hydrogen groups in the active hydrogen group-containing compound contained in the mixed solution. Here, the active hydrogen group-containing compound also contains water.

According to the composition for forming flexible polyurethane foam of the present embodiment described above, a flexible polyurethane foam is formed by reacting and foaming a mixed solution of a first liquid and a second liquid. The first liquid and the second liquid in the composition are used (mixed) so that the NCO index is, for example, 95, and the mixing ratio of the first liquid and the second liquid can be changed. The first liquid and the second liquid in the composition may be used (mixed) so that the NCO index is, for example, 70 to 140.

According to the composition for forming flexible polyurethane foam of the present embodiment, it is possible to obtain a flexible polyurethane foam having a hardness distribution at which seating comfort becomes favorable when used as a cushion material. In addition, according to the flexible polyurethane foam of the present embodiment, it is possible to obtain a flexible polyurethane foam having an apparent density of 30 to 70 kg/m³, a 25% compressive hardness of 100 to 350 N/314 cm² of a foam test piece with a skin produced by the B method described in JIS K6400, and an elongation rate of 100% or more. In addition, it is possible to obtain a flexible polyurethane foam having a rebound resilience of 45 to 75% and a compression set under humid conditions of less than 20%.

### <Method of producing flexible polyurethane foam>

A method of producing a flexible polyurethane foam of one embodiment includes a step of reacting a polyol component and a polyisocyanate component in the presence of a catalyst, a foam stabilizer, a foaming agent, a crosslinking agent and other components (an antioxidant, etc.) that are optionally used to obtain a flexible polyurethane foam. In the method, water is used as the foaming agent, 0.1 to 5.0 parts by mass of a sugar alcohol with respect to 100 parts by mass of the polyol component is used as the crosslinking agent, and no divalent tin catalyst is used. Details of components used in the above step are the same as those of the components that can be contained in the above polyol composition and isocyanate composition.

In the step, for example, a polyol component, a polyisocyanate component, a catalyst, a foam stabilizer, a foaming agent, a crosslinking agent and other components (an antioxidant, etc.) that are optionally used are mixed, and the mixed solution is reacted and foamed. The mixed solution can be obtained, for example, by preparing the first liquid and the second liquid in the composition for forming flexible polyurethane foam of the above embodiment in advance and mixing them.

The NCO index during mixing is preferably 70 or more in order to improve the durability of the foam and minimize an excessive increase in single foamability. The NCO index during mixing is preferably 140 or less, and more preferably 120 or less in order for the unreacted isocyanate to be unlikely to remain for a long time and the molding cycle to be unlikely to be extended and in order for delay in increasing the molecular weight to be unlikely to occur and the moldability of the polyurethane foam to be improved. In this regard, the NCO index during mixing is preferably 70 to 140, and more preferably 70 to 120.

The method of producing a flexible polyurethane foam may be a method of producing a flexible polyurethane mold foam (hereinafter referred to as a flexible mold foam) in which the mixed solution (unfoamed stock solution) is injected into a mold and then foamed and cured.

In a method of producing a flexible mold foam, the mold temperature when the mixed solution (unfoamed stock solution) is injected into a mold is generally 30 to 80°C, and preferably 45 to 70°C. If the mold temperature when the mixed solution (unfoamed stock solution) is injected into a mold is 30°C or higher, the production cycle is unlikely to be extended due to a decrease in the reaction rate. In addition, when the mold temperature is 80°C or lower, the reaction between water, which is a foaming agent, and isocyanate proceeds more gently than the reaction between a polyol and isocyanate, and the moldability of the polyurethane foam tends to be improved.

The curing time when the mixed solution (unfoamed stock solution) is foamed and cured is preferably 10 minutes or less and more preferably 7 minutes or less in consideration of the production cycle of a general flexible mold foam.

When a flexible mold foam is produced, as in the case of a general flexible mold foam, the above components can be mixed using a high-pressure foaming machine, a low-pressure foaming machine or the like.

Examples of mixing methods include a dynamic mixing method in which mixing is performed in a machine head mixing chamber of a foaming machine and a static mixing method in which mixing is performed in a liquid feeding pipe. These mixing methods may be used in combination. Mixing of a gas component such as a physical foaming agent and a liquid component is performed by static mixing in many cases. In addition, mixing of components that can be stably stored as a liquid is performed by dynamic mixing in many cases. A foaming device is preferably a high-pressure foaming device that does not require a solvent for washing the mixing part.

After the mixing, the obtained mixed solution is discharged into the mold, foamed and cured, and demolding is then performed. In order to smoothly perform the demolding, it is preferable to apply a mold release agent to the mold in advance. As the mold release agent to be used, a mold release agent that is generally used in the field of molding processing may be used.

The demolded product (flexible mold foam) can be used without change, but it is preferable to destroy the cell membrane of the foam under compression or depressurization, and stabilize the appearance and sizes of the product. Compression and depressurization may be performed by known methods.

The flexible polyurethane foam produced by the above method not only has excellent physical properties such as the hardness and the rebound resilience, but also has a hardness distribution in the thickness direction (foaming direction during foam forming) and in which one side in the thickness direction has a lower compressive hardness than the other side (for example, has a hardness distribution in which the compressive hardness increases from one side to the other side in the thickness direction). Therefore, when the side with a lower compressive hardness (flexible side) is set as the seat side, it is possible to provide a cushion material having excellent ride comfort.

Specifically, when the seat side (flexible side) of the flexible polyurethane foam produced by the method is set as the upper side, the length from the end surface of the upper side to the end surface of the lower side is set as the thickness of the flexible polyurethane foam, two foams having a thickness that is 45% of the thickness of the flexible polyurethane foam are cut out by cutting the flexible polyurethane foam at positions where the length from the end surface (upper surface) of the upper side in the thickness direction is 45% and 90% of the thickness of the flexible polyurethane foam along a plane perpendicular to the thickness direction, and when an average value of the 25% compressive hardnesses of the two cut-out foams is set as 100, the ratio of the 25% compressive hardness of the foam on the upper side between the two foams with respect to the average value is 50 to 85. When the flexible polyurethane foam is formed by molding, that is, when the flexible polyurethane foam is a molded component, the upper mold side of the mold is the lower part, and the lower mold side of the mold is the upper part.

A mechanism by which the flexible polyurethane foam produced by the method exhibits a favorable hardness distribution is speculated by the inventors to be as follows. As described above, for example, when the flexible polyurethane foam used as a cushion material is molded, the lower mold side of the mold is the upper part, and the upper mold side is the lower part. In the flexible polyurethane foam, the upper side is formed first in the mold, and after volume expansion due to foaming, the lower part is finally formed. When the foam is formed on the upper side, the sugar alcohol associates with water, which is a foaming agent, to delay the reaction between water and polyisocyanate, and minimize formation of urea bonds that cause high hardness. On the other hand, it is considered that, on the lower side from a core layer part formed according to the reaction at a high temperature, urea bonds are concentrated and formed so that the hardness increases and the hardness distribution is exhibited.

The apparent density of the flexible polyurethane foam is, for example, 30 to 70 kg/m³. In addition, the 25% compressive hardness of the foam test piece with a skin produced by the B method described in JIS K6400 is, for example, 100 to 350 N/314 cm². In addition, the elongation rate is 100% or more. In addition, the rebound resilience is, for example, 45 to 75%. In addition, the compression set under humid conditions is, for example, less than 20%. The apparent density, the 25% compressive hardness, the elongation rate, the rebound resilience and the compression set under humid conditions can be determined by the methods described in JIS K6400.

### [Examples]

Hereinafter, the present invention will be described in more detail with reference to examples and comparative examples, but the present invention is not limited to the following examples.

In the following examples and comparative examples, the following raw materials were used.

### [Raw materials used]

-Polyol 1: a polyethylene polypropylene ether polyol having an average number of functional groups of 3.0, a hydroxy group value of 24 (mg KOH/g), a terminal primary conversion rate of 84 mol%, an oxyethylene unit of 14.6 mass%, and a total unsaturation degree of 0.03 meq./g (product name: NEF-693 commercially available from Tosoh Corporation)
·Polyol 2: a polyethylene polypropylene ether polyol having an average number of functional groups of 3.0, a hydroxy group value of 24 (mg KOH/g), a terminal primary conversion rate of 79 mol%, an oxyethylene unit of 14.0 mass%, and a total unsaturation degree of 0.19 meq./g (product name: NEF-728 commercially available from Tosoh Corporation)
·Polyol 3: a polyether polyol having an average number of functional groups of 3.0, a hydroxy group value of 24 (mg KOH/g), and an oxyethylene unit of 70 mass% (product name: NEF-729 commercially available from Tosoh Corporation)
·Crosslinking agent 1: D-sorbitol (commercially available from Tokyo Chemical Industry Co., Ltd., monosaccharide alcohol containing 97 mass% of a monosaccharide alcohol as a sugar composition and having a number average molecular weight of 182)
·Crosslinking agent 2: maltitol (commercially available from Tokyo Chemical Industry Co., Ltd., disaccharide alcohol containing 4 mass% of a monosaccharide alcohol as a sugar composition and having a number average molecular weight of 344)
·Crosslinking agent 3: a sugar alcohol mixture 1 (a mixture of a monosaccharide alcohol to decasaccharide alcohol, and containing 85 mass% of a monosaccharide alcohol as a sugar composition, and with 70 mass% of an aqueous solution, and having a number average molecular weight of 214)
·Crosslinking agent 4: sorbitol C (commercially available from Food Science Co., Ltd., a mixture of a monosaccharide alcohol to decasaccharide alcohol, and containing 90 mass% of a monosaccharide alcohol as a sugar composition, and with 70 mass% of an aqueous solution, and having a number average molecular weight of 202)
·Crosslinking agent 5: a sugar alcohol mixture 2 (a mixture of a monosaccharide alcohol to decasaccharide alcohol, and containing 3 mass% of a monosaccharide alcohol as a sugar composition, and having a number average molecular weight of 2013)
·Crosslinking agent 6: D-(+)-glucose (commercially available from FUJIFILM Wako Pure Chemical Corporation, sugar (monosaccharides of reducing sugar))
·Crosslinking agent 7: purified glycerin (commercially available from Sakamoto Yakuhin Kogyo Co., Ltd.)
·Crosslinking agent 8: trimethylolpropane (commercially available from Mitsubishi Gas Chemical Company, Inc.)
·Crosslinking agent 9: diethanolamine (commercially available from Mitsui Chemicals, Inc.)
·Crosslinking agent 10: polyethylene glycol (product name: PEG200, a number average molecular weight of 200, commercially available from Sanyo Chemical Industries, Ltd.)
·Crosslinking agent 11: 1,4-cyclohexanedimethanol (product name: CHDM-D commercially available from EASTMAN CHEMICAL)
·Catalyst 1: 2-hydroxymethyltriethylenediamine (product name: RZETA HD commercially available from Tosoh Corporation)
·Catalyst 2: N,N,N'-trimethyl-N'-hydroxyethyl-bisaminoethyl ether (product name: TOYOCAT RX-10 commercially available from Tosoh Corporation)
·Catalyst 3: tin(II) 2-ethylhexanoate (commercially available from FUJIFILM Wako Pure Chemical Corporation)
·Foam stabilizer 1: a silicone foam stabilizer (product name: L-3639LF commercially available from Momentive Performance Materials)
·Isocyanate 1: a polyisocyanate mixture having an MDI content of 85 mass% and having an isomer content of 38 mass% and containing polyphenylene polymethylene polyisocyanate (product name: CEF-550 commercially available from Tosoh Corporation)
·Antioxidant 1: a phosphite-based antioxidant (product name: ADK STAB 1500 commercially available from ADEKA)

### <Examples 1 to 13 and Comparative Examples 1 to 8>

### (Preparation of polyol composition)

After a reactor including a stirrer, a cooling pipe, a nitrogen introduction pipe and a thermometer was purged with nitrogen, 100 g of polyol 1, 1.5 g of polyol 3, 1.5 g of crosslinking agent 1, 2.0 g of crosslinking agent 11, 0.8 g of catalyst 1, 0.2 g of catalyst 2, 1.0 g of foam stabilizer 1, and 3.6 g of water were added and stirred at 23°C for 0.5 hours to obtain a polyol composition (P-1). Other polyol compositions (P-2 to P-17) were also prepared in the same manner as the polyol composition (P-1) by adding raw materials as shown in Table 1 to Table 3.

### (Preparation of isocyanate composition (I-1))

In Examples 1 to 9 and Comparative Examples 1 to 8, isocyanate 1 was used as the isocyanate composition (I-1).

### (Preparation of isocyanate compositions (I-2 to I-5))

After a reactor including a stirrer, a cooling pipe, a nitrogen introduction pipe and a thermometer was purged with nitrogen, 100 g of isocyanate 1 and 0.03 g of antioxidant 1 were added and stirred at 23°C for 0.5 hours to obtain an isocyanate composition (I-2). Other isocyanate compositions (I-3 to I-5) were also prepared in the same manner as the isocyanate composition (I-2) by adding raw materials as shown in Table 2.

### (Production of flexible polyurethane foam)

Flexible polyurethane foams were produced using polyol compositions and isocyanate compositions in combinations shown in Table 1 to Table 3. Specifically, first, the liquid temperatures of the isocyanate composition and the polyol composition (a mixture of all raw materials other than the isocyanate composition) were adjusted to 24°C to 26°C. Next, a predetermined amount of the polyisocyanate component was added to the polyol composition so that the NCO index (a percentage of NCO groups with respect to the number of active hydrogen atoms present in the formulation) was 95, and the mixture was mixed with a mixer (7,000 rpm) for 7 seconds. Then, the obtained mixed solution was injected into a mold, and the mixed solution was reacted and foamed. The conditions for reaction foaming were as follows.

### [Conditions]

·Mold temperature: 60 to 70°C
·Mold shape: 300 mm×300 mm×100 mm
·Mold material: aluminum
·Curing time: 5 minutes

After the flexible polyurethane foam was molded by the above method, the obtained molded component of the flexible polyurethane foam (molded component) was taken out from the mold.

**[Table 1]**

| | | | Example | | | | | | |
|---|---|---|---|---|---|---|---|---|---|
| | | | 1 | 2 | 3 | 4 | 5 | 6 | 7 |
| Second liquid | Isocyanate composition No. | | I-1 | I-1 | I-1 | I-1 | I-1 | I-1 | I-1 |
| | Polyisocyanate component | Isocyanate 1 | 10 0 | 10 0 | 10 0 | 10 0 | 100 | 10 0 | 10 0 |
| First liquid | Polyol composition No. | | P-1 | P-2 | P-3 | P-4 | P-5 | P-6 | P-7 |
| | Polyol component | Polyol 1 | 10 0 | 10 0 | 10 0 | 10 0 | 100 | 10 0 | 10 0 |
| | | Polyol 3 | 1.5 | 1.5 | 1.5 | 1.5 | 1.5 | 1.5 | 1.5 |
| | Crosslinkin g agent | Crosslink ing agent 1 (sugar alcohol) | 1.5 | - | - | - | - | 0.8 | 4.5 |
| | | Crosslink ing agent 2 (sugar alcohol) | - | 1.5 | - | - | - | - | - |
| | | Crosslink ing agent 3 (sugar alcohol) | - | - | 2.1 4 | - | - | - | - |
| | | Crosslink ing agent 4 (sugar alcohol) | - | - | - | 2.1 4 | - | - | - |
| | | Crosslink ing agent 5 (sugar alcohol) | - | - | - | - | 1.5 | - | - |
| | | Crosslink ing agent 11 | 2.0 | 2.0 | 2.0 | 2.0 | 2.0 | 2.0 | 2.0 |
| | Catalyst | Catalyst 1 | 0.8 | 0.8 | 0.8 | 0.8 | 0.8 | 0.8 | 0.8 |
| | | Catalyst 2 | 0.2 | 0.2 | 0.2 | 0.2 | 0.2 | 0.2 | 0.2 |
| | Foam stabilizer | Foam stabilizer 1 | 1.0 | 1.0 | 1.0 | 1.0 | 1.0 | 1.0 | 1.0 |
| | Foaming agent | Water | 3.6 | 3.6 | 2.9 6 | 2.9 6 | 3.6 | 3.6 | 3.6 |
| | Total unsaturation | | 0.0 | 0.0 | 0.0 | 0.0 | 0.0 | 0.0 | 0.0 |
| | degree of polyol 1 (meq./g) | | 3 | 3 | 3 | 3 | 3 | 3 | 3 |
| | Number average molecular weight of sugar alcohol | | 18 2 | 34 4 | 21 4 | 20 2 | 201 3 | 18 2 | 18 2 |
| | Content of monosaccharide alcohol in sugar alcohol component (mass%) | | 97 | 4 | 85 | 90 | 3 | 97 | 97 |
| NCO index | | | 95 | 95 | 95 | 95 | 95 | 95 | 95 |

**[Table 2]**

| | | | Example | | | | | |
|---|---|---|---|---|---|---|---|---|
| | | | 8 | 9 | 10 | 11 | 12 | 13 |
| Secon d liquid | Isocyanate composition No. | | I-1 | I-1 | I-2 | I-3 | I-4 | I-5 |
| | Polyisocyana te component | Isocyanate 1 | 100 | 100 | 100 | 100 | 100 | 100 |
| | Antioxidant | Antioxidan t 1 | - | - | 0.0 3 | 0.0 8 | 0.2 0 | 0.27 |
| First liquid | Polyol composition No. | | P-8 | P-9 | P-1 | P-1 | P-1 | P-1 |
| | Polyol component | Polyol 1 | 100 | - | 100 | 100 | 100 | 100 |
| | | Polyol 2 | - | 100 | - | - | - | - |
| | | Polyol 3 | 1.5 | 1.5 | 1.5 | 1.5 | 1.5 | 1.5 |
| | Crosslinking agent | Crosslinki ng agent 1 (sugar alcohol) | 1.5 | 1.5 | 1.5 | 1.5 | 1.5 | 1.5 |
| | | Crosslinki ng agent 11 | - | 2.0 | 2.0 | 2.0 | 2.0 | 2.0 |
| | Catalyst | Catalyst 1 | 0.8 | 0.8 | 0.8 | 0.8 | 0.8 | 0.8 |
| | | Catalyst 2 | 0.2 | 0.2 | 0.2 | 0.2 | 0.2 | 0.2 |
| | Foam stabilizer | Foam stabilizer 1 | 1.0 | 1.0 | 1.0 | 1.0 | 1.0 | 1.0 |
| | Foaming agent | Water | 3.6 | 3.6 | 3.6 | 3.6 | 3.6 | 3.6 |
| | Total unsaturation degree of polyol 1 or 2(meq./g) | | 0.0 3 | 0.1 9 | 0.0 3 | 0.0 3 | 0.0 3 | 0.03 |
| | Number average molecular weight of sugar alcohol | | 182 | 182 | 182 | 182 | 182 | 182 |
| | Content of monosaccharide alcohol in sugar alcohol component (mass%) | | 97 | 97 | 97 | 97 | 97 | 97 |
| NCO index | | | 95 | 95 | 95 | 95 | 95 | 95 |
| Amount of phosphite-based antioxidant (ppm) | | | 0 | 0 | 100 | 293 | 750 | 100 0 |

**[Table 3]**

| | | | Comparative Example | | | | | | | |
|---|---|---|---|---|---|---|---|---|---|---|
| | | | 1 | 2 | 3 | 4 | 5 | 6 | 7 | 8 |
| Seco nd liqui d | Isocyanate composition No. | | I-1 | I-1 | I-1 | I-1 | I-1 | I-1 | I-1 | I-1 |
| | Polyisocya nate componen t | Isocyana te 1 | 10 0 | 10 0 | 10 0 | 10 0 | 10 0 | 10 0 | 10 0 | 10 0 |
| First liqui d | Polyol composition No. | | P-10 | P-11 | P-12 | P-13 | P-14 | P-15 | P-16 | P-17 |
| | Polyol componen t | Polyol 1 | 10 0 | 10 0 | 10 0 | 10 0 | 10 0 | 10 0 | 10 0 | 10 0 |
| | | Polyol 3 | 1.5 | 1.5 | 1.5 | 1.5 | 1.5 | 1.5 | 1.5 | 1.5 |
| | Crosslinki ng agent | Crosslin king agent 1 (sugar alcohol) | - | - | - | - | - | 5.5 | - | 1.5 |
| | | Crosslin king agent 6 | - | - | - | - | - | - | 1.5 | - |
| | | Crosslin king agent 7 | 1.5 | - | - | - | - | - | - | - |
| | | Crosslin king agent 8 | - | 1.5 | - | - | - | - | - | - |
| | | Crosslin king agent 9 | - | - | 1.5 | - | - | - | - | - |
| | | Crosslin king agent 10 | - | - | - | 1.5 | - | - | - | - |
| | | Crosslin king agent 11 | 2.0 | 2.0 | 2.0 | 2.0 | 2.0 | 2.0 | 2.0 | 2.0 |
| | Catalyst | Catalyst 1 | 0.8 | 0.8 | 0.8 | 0.8 | 0.8 | 0.8 | 0.8 | - |
| | | Catalyst 2 | 0.2 | 0.2 | 0.2 | 0.2 | 0.2 | 0.2 | 0.2 | 0.2 |
| | | Catalyst 3 | - | - | - | - | - | - | - | 0.2 5 |
| | Foam stabilizer | Foam stabilizer 1 | 1.0 | 1.0 | 1.0 | 1.0 | 1.0 | 1.0 | 1.0 | 1.0 |
| | Foaming agent | Water | 3.6 | 3.6 | 3.6 | 3.6 | 3.6 | 3.6 | 3.6 | 3.6 |
| | Total unsaturation degree of polyol 1 (meq./g) | | 0.0 3 | 0.0 3 | 0.0 3 | 0.0 3 | 0.0 3 | 0.0 3 | 0.0 3 | 0.0 3 |
| | Number average molecular weight of sugar alcohol | | - | - | - | - | - | 1.8 2 | - | - |
| | Content of monosaccharide alcohol in sugar alcohol component (mass%) | | - | - | - | - | - | 97 | | - |
| NCO index | | | 95 | 95 | 95 | 95 | 95 | 95 | 95 | 95 |

### (Evaluation of storage stability of polyol composition)

After the polyol composition was prepared, it was stored in a drying machine at 40°C or 60°C for 30 days, and the storage stability was then evaluated according to the presence of separation and coloring. Even after 30 days, if the polyol composition was not separated or colored, the storage stability was evaluated as A, if the polyol composition was not separated but colored, the storage stability was evaluated as B, and if the polyol composition was separated and colored, the storage stability was evaluated as C. The results are shown in Table 4 to Table 6.

### (Evaluation of moldability)

The moldability was evaluated during molding of the flexible polyurethane foam. Specifically, when it was possible to mold the flexible polyurethane foam without causing a phenomenon in which the polyurethane foam reached the maximum height and then sunk greatly and disintegrated and a phenomenon in which the produced polyurethane foam contracted immediately after foaming or after curing, the moldability was evaluated as A, and when these phenomena were observed and it was not possible to mold the flexible polyurethane foam, the moldability was evaluated as B. The results are shown in Table 4 to Table 6.

### (Evaluation of physical properties of flexible polyurethane foam)

The apparent density, the rebound resilience, the compression set under humid conditions and the elongation rate of the flexible polyurethane foam molded by the method were determined by the methods described in JIS K6400. In addition, a foam test piece with a skin was produced by the B method described in JIS K6400, and the 25% compressive hardness (25% ILD) was determined. The results are shown in Table 4 to Table 6.

### (Measurement of hardness distribution of flexible polyurethane foam)

The hardness distribution in the foaming direction of the flexible polyurethane foam molded by the above method was measured by the following method. First, the flexible polyurethane foam was disposed so that the upper mold side of the mold was the lower part, and the lower mold side thereof was the upper part, and the flexible polyurethane foam was cut every 45 mm from the end surface (upper surface) of the upper side toward the lower side. Specifically, the flexible polyurethane foam was cut at positions where the length from the end surface of the upper side in the thickness direction (foaming direction) was 45 mm and 90 mm along a plane perpendicular to the thickness direction. Accordingly, an upper side foam corresponding to a part having a thickness of 0 mm (upper side) to 45.0 mm and a lower side foam corresponding to a part having a thickness of 45.0 mm to 90.0mm were cut out from the flexible polyurethane foam.

The obtained two foams were used as evaluation samples, and the 25% compressive hardness thereof was measured. Specifically, first, a pressing plate (a disk having a diameter of 200 mm) was disposed on the evaluation sample, and the evaluation sample was compressed until the stress received by the pressing plate reached 0.98 N. This position was used as the initial position of the pressing plate, and the thickness of the evaluation sample at this position was regarded as 100% thickness. Next, the pressing plate was moved toward the evaluation sample at a speed of 50 mm/min by a distance of 25% of the thickness of the evaluation sample, and the evaluation sample was compressed. Then, the pressing plate was returned to the initial position at a speed of 50 mm/min. In the above procedure, when the evaluation sample was compressed and deformed by 25%, the value of stress applied to the evaluation sample was measured, and this value was defined as 25% compressive hardness. Next, an average value of the 25% compressive hardnesses of two evaluation samples was set as 100, and the ratio of the 25% compressive hardness of each foam with respect to the average value was obtained. This hardness ratio is a ratio of the compressive hardness of each evaluation sample with respect to the average compressive hardness in the foaming direction (thickness direction). When the ratio of the compressive hardness of the upper side foam with respect to the average value was 50 to 85, it was evaluated as having a hardness distribution at which seating comfort becomes favorable when used as a cushion material. The results are shown in Table 4 to Table 6.

### (Method of calculating urea bond ratio)

FT-IR measurement was performed on the evaluation sample produced in the above hardness distribution measurement. In the obtained IR spectrum, the peak height derived from an urea bond observed near a wave number of 1,660 cm⁻¹ was divided by the peak height derived by an urethane bond observed near a wave number 1,710 cm⁻¹, and the urea bond ratio in respective evaluation samples was calculated. A smaller urea bond ratio indicates that formation of urea bonds was minimized and the hardness was less likely to be exhibited.

### (Evaluation of anisotropy (shape) of cell of flexible polyurethane foam)

The anisotropies of cells of the flexible polyurethane foams of Example 1 and Comparative Example 3 molded by the above method were evaluated by the following method. First, the flexible polyurethane foam was disposed so that the upper mold side of the mold was the lower part and the lower mold side thereof was the upper part, and the flexible polyurethane foam was cut every 22.5 mm from the end surface (upper surface) of the upper side toward the lower side. Specifically, the flexible polyurethane foam was cut at a position where the length from the end surface of the upper side in the thickness direction (foaming direction) was 22.5 mm, a position where the length was 45 mm, a position where the length was 67.5 mm, and a position where the length was 90 mm along a plane perpendicular to the thickness direction. Accordingly, a first layer corresponding to a part having a thickness of 0 mm (upper side) to 22.5 mm, a second layer corresponding to a part having a thickness of 22.5 mm to 45 mm, a third layer corresponding to a part having a thickness of 45 mm to 67.5 mm, and a fourth layer corresponding to a part having a thickness of 67.5 mm to 90 mm were cut out from the flexible polyurethane foam.

The obtained four foams (first to fourth layers) were divided into two equal parts in the vertical direction, and an enlarged image of a center part (field of view: 3.2 mm×3.2 mm) of the cross section was acquired using a microscopic microscope. The acquired image was observed with the direction from bottom to top as the foaming direction, 30 cells (foaming cells) were randomly selected from the image, and the cell length of each cell in the foaming direction and the cell length orthogonal to the foaming direction were measured. The value obtained by dividing the cell length in the foaming direction by the cell length orthogonal to the foaming direction was obtained for each cell, and the average value of 30 cells was used as the evaluation value of cell anisotropy. This means that, when the numerical value of anisotropy is closer to 1, the cell shape is closer to the spherical shape, when the numerical value is smaller, the shape is horizontally long in the foaming direction, and when the numerical value is larger, the shape is vertically long with respect to the foaming direction. The results are shown in Table 4 and Table 6.

### (Measurement of volatilizing amount of aldehydes)

For the flexible polyurethane foams of Example 1 and Examples 10 to 13 molded by the above method, the volatilizing amounts of formaldehyde, acetaldehyde and propionaldehyde were measured. Specifically, first, a rectangular parallelepiped test piece having a skin surface of 100 mm in length×70 mm in width and having a thickness of 80 mm was cut out from each molded component. Next, the obtained test piece was enclosed in a 10 L sampling bag together with 4 L of nitrogen. Next, the sampling bag was heated at 65°C for 2 hours and volatile components were collected in a dedicated collection pipe (DNPH cartridge). The collected volatile components were analyzed through high performance liquid chromatography and thus the volatilizing amount (diffusion amount) of each aldehyde gas was measure. The results are shown in Table 4 and Table 5. Here, measurement conditions for high performance liquid chromatography were as follows.

### [Conditions]

·Device: LC-20A series commercially available from Shimadzu Corporation
·Column: TSKgel ODS-80TsQA
·Mobile phase: acetonitrile/water
·Mobile phase speed: 1.0 mL/min
·Column temperature: 40°C
·Detector: UV (λ=360 nm)
·Calibration curve: created using an acetonitrile solution of aldehyde-DNPH as a standard sample solution

When the volatilizing amount of formaldehyde was 0.35 µg/sample or less, it was determined to be good. When the volatilizing amount of acetaldehyde was 0.30 µg/sample or less, it was determined to be good. When the volatilizing amount of propionaldehyde was 0.18 µg/sample or less, it was determined to be good.

**[Table 4]**

| | Example | | | | | | |
|---|---|---|---|---|---|---|---|
| | 1 | 2 | 3 | 4 | 5 | 6 | 7 |
| Storage stability of polyol composition at 40°C | A | A | A | A | A | A | A |
| Storage stability of polyol composition at 60°C | A | B | B | A | B | A | A |
| Moldability | A | A | A | A | A | A | A |
| Apparent density (kg/m³) | 48 | 48 | 48 | 48 | 48 | 48 | 48 |
| 25% compressive hardness (N/314 cm²) | 223 | 226 | 228 | 227 | 226 | 183 | 278 |
| Rebound resilience (%) | 56 | 55 | 55 | 55 | 56 | 55 | 54 |
| Compression set under humid conditions (%) | 15 | 15 | 14 | 14 | 12 | 15 | 12 |
| Elongation rate (%) | 103 | 105 | 111 | 108 | 112 | 105 | 102 |
| Hardness distribution ratio [upper side] (%) | 73 | 75 | 74 | 73 | 76 | 79 | 72 |
| Hardness distribution ratio [lower side] (%) | 127 | 125 | 127 | 126 | 124 | 121 | 128 |
| Urea bond ratio [upper side] | 0.96 | 0.99 | 0.96 | 0.97 | 0.98 | 0.98 | 0.96 |
| Urea bond ratio [lower side] | 1.06 | 1.02 | 1.06 | 1.06 | 1.03 | 1.05 | 1.06 |
| Cell anisotropy [first layer] | 0.76 | - | - | - | - | - | - |
| Cell anisotropy [second layer] | 1.08 | - | - | - | - | - | - |
| Cell anisotropy [third layer] | 1.12 | - | - | - | - | - | - |
| Cell anisotropy [fourth layer] | 1.11 | - | - | - | - | - | - |
| Formaldehyde (µg/sample) | 0.31 | - | - | - | - | - | - |
| Acetaldehyde (µg/sample) | 0.28 | - | - | - | - | - | - |
| Propionaldehyde (µg/sample) | 0.17 | - | - | - | - | - | - |

**[Table 5]**

| | Example | | | | | |
|---|---|---|---|---|---|---|
| | 8 | 9 | 10 | 11 | 12 | 13 |
| Storage stability of polyol composition at 40°C | A | A | A | A | A | A |
| Storage stability of polyol composition at 60°C | A | A | A | A | A | A |
| Moldability | A | A | A | A | A | A |
| Apparent density (kg/m³) | 48 | 48 | 48 | 48 | 48 | 48 |
| 25% compressive hardness (N/314 cm²) | 208 | 205 | 225 | 223 | 226 | 224 |
| Rebound resilience (%) | 53 | 52 | 56 | 55 | 56 | 56 |
| Compression set under humid conditions (%) | 16 | 17 | 14 | 15 | 15 | 14 |
| Elongation rate (%) | 107 | 105 | 105 | 102 | 106 | 103 |
| Hardness distribution ratio [upper side] (%) | 73 | 74 | 74 | 73 | 73 | 74 |
| Hardness distribution ratio [lower side] (%) | 127 | 126 | 126 | 127 | 127 | 126 |
| Urea bond ratio [upper side] | 0.98 | 0.95 | 0.95 | 0.96 | 0.96 | 0.95 |
| Urea bond ratio [lower side] | 1.04 | 1.04 | 1.04 | 1.05 | 1.06 | 1.04 |
| Formaldehyde (µg/sample) | - | - | 0.26 | 0.22 | 0.11 | 0.15 |
| Acetaldehyde (µg/sample) | - | - | 0.25 | 0.18 | 0.16 | 0.22 |
| Propionaldehyde (µg/sample) | - | - | 0.14 | 0.09 | 0.06 | 0.11 |

**[Table 6]**

| | Comparative Example | | | | | | | |
|---|---|---|---|---|---|---|---|---|
| | 1 | 2 | 3 | 4 | 5 | 6 | 7 | 8 |
| Storage stability of polyol composition at 40°C | A | A | A | A | A | A | C | C |
| Storage stability of polyol composition at 60°C | A | A | A | A | A | A | C | C |
| Moldability | A | A | A | A | A | B | A | - |
| Apparent density (kg/m³) | 48 | 48 | 49 | 48 | 48 | - | 48 | - |
| 25% compressive hardness (N/314 cm²) | 171 | 176 | 180 | 163 | 161 | - | 226 | - |
| Rebound resilience (%) | 55 | 57 | 62 | 55 | 53 | - | 55 | - |
| Compression set under humid conditions (%) | 12 | 12 | 12 | 11 | 14 | - | 14 | - |
| Elongation rate (%) | 87 | 83 | 87 | 95 | 99 | - | 101 | - |
| Hardness distribution ratio [upper side] (%) | 93 | 91 | 90 | 91 | 92 | - | 76 | - |
| Hardness distribution ratio [lower side] (%) | 107 | 109 | 111 | 110 | 108 | - | 124 | - |
| Urea bond ratio [upper side] | 1.05 | 1.03 | 1.05 | 1.04 | 1.05 | - | 0.97 | - |
| Urea bond ratio [lower side] | 1.00 | 1.00 | 1.00 | 1.00 | 0.99 | - | 1.03 | - |
| Cell anisotropy [first layer] | - | - | 0.76 | - | - | - | - | - |
| Cell anisotropy [second layer] | - | - | 1.04 | - | - | - | - | - |
| Cell anisotropy [third layer] | - | - | 1.11 | - | - | - | - | - |
| Cell anisotropy [fourth layer] | - | - | 1.09 | - | - | - | - | - |

## Claims

1. A polyol composition for forming flexible polyurethane foam comprising a polyol component having a number average molecular weight of 2,500 or more, a catalyst, a foam stabilizer, a foaming agent, and a crosslinking agent,
wherein water is contained as the foaming agent,
wherein a sugar alcohol having a number average molecular weight of 120 or more and less than 2,500 is contained as the crosslinking agent,
wherein the content of the sugar alcohol with respect to 100 parts by mass of the polyol component is 0.1 to 5.0 parts by mass, and
wherein no divalent tin catalyst is contained.

2. The polyol composition for forming flexible polyurethane foam according to claim 1, wherein the sugar alcohol comprises a monosaccharide alcohol.

3. The polyol composition for forming flexible polyurethane foam according to claim 2, wherein the content of the monosaccharide alcohol with respect to a total amount of the sugar alcohol is 90 mass% or more.

4. The polyol composition for forming flexible polyurethane foam according to any one of claims 1 to 3, wherein the polyol component comprises a polyether polyol having a total unsaturation degree of 0.04 meq./g or less.

5. The polyol composition for forming flexible polyurethane foam according to any one of claims 1 to 4, further comprising at least one cyclic glycol selected from the group consisting of alicyclic glycols and aromatic glycols as the crosslinking agent.

6. A composition for forming flexible polyurethane foam comprising a first liquid composed of the polyol composition according to any one of claims 1 to 5 and a second liquid composed of an isocyanate composition comprising a polyisocyanate component.

7. The composition for forming flexible polyurethane foam according to claim 6, wherein the polyisocyanate component comprises diphenylmethane diisocyanate.

8. The composition for forming flexible polyurethane foam according to claim 7, wherein the content of the diphenylmethane diisocyanate with respect to a total amount of the polyisocyanate component is 50 to 85 mass%.

9. The composition for forming flexible polyurethane foam according to claim 7 or 8,
wherein the diphenylmethane diisocyanate comprises at least one of 2,2'-diphenylmethane diisocyanate and 2,4'-diphenylmethane diisocyanate, and
wherein a total amount of the 2,2'-diphenylmethane diisocyanate and the 2,4'-diphenylmethane diisocyanate is 10 to 50 mass% with respect to a total amount of the diphenylmethane diisocyanate.

10. The composition for forming flexible polyurethane foam according to any one of claims 6 to 9, wherein at least one of the first liquid and the second liquid comprise a phosphite-based antioxidant.

11. The composition for forming flexible polyurethane foam according to claim 10, wherein, when the first liquid and the second liquid are mixed so that an NCO index is 95, the content of the phosphite-based antioxidant in the mixed solution with respect to a total amount of the mixed solution is 50 to 1,100 ppm by mass.

12. A flexible polyurethane foam obtained by reacting and foaming a mixed solution of the first liquid and the second liquid in the composition for forming flexible polyurethane foam according to any one of claims 6 to 11.

13. The flexible polyurethane foam according to claim 12,
wherein the flexible polyurethane foam is a molded component,
wherein the flexible polyurethane foam has a lower part corresponding to an upper mold side of a mold and an upper part corresponding to a lower mold side of the mold,
wherein the length from an end surface of the upper side to an end surface of the lower side is set as a thickness of the flexible polyurethane foam, and
wherein when two foams having a thickness that is 45% of the thickness of the flexible polyurethane foam are cut out by cutting the flexible polyurethane foam at positions where the length from the end surface of the upper side in a thickness direction is 45% and 90% of the thickness of the flexible polyurethane foam along a plane perpendicular to the thickness direction, and an average value of the 25% compressive hardnesses of the two foams cut out is set as 100, the ratio of the 25% compressive hardness of the foam on the upper side between the two foams with respect to the average value is 50 to 85.

14. The flexible polyurethane foam according to claim 12 or 13,
wherein the apparent density is 30 to 70 kg/m³,
wherein the 25% compressive hardness of a foam test piece with a skin produced by the B method described in JIS K6400 is 100 to 350 N/314 cm², and
wherein the elongation rate is 100% or more.

15. The flexible polyurethane foam according to any one of claims 12 to 14,
wherein the rebound resilience is 45 to 75%.

16. The flexible polyurethane foam according to any one of claims 12 to 15,
wherein the compression set under humid conditions is less than 20%.

17. The flexible polyurethane foam according to any one of claims 12, 13, 15 and 16,
wherein the 25% compressive hardness of a foam test piece with a skin produced by the B method described in JIS K6400 is 100 to 350 N/314 cm².

18. A method of producing a flexible polyurethane foam, comprising a step of reacting a polyol component having a number average molecular weight of 2,500 or more and a polyisocyanate component in the presence of a catalyst, a foam stabilizer, a foaming agent and a crosslinking agent to obtain a flexible polyurethane foam,
wherein, in the step, water is used as the foaming agent, 0.1 to 5.0 parts by mass of a sugar alcohol having a number average molecular weight of 120 or more and less than 2,500 with respect to 100 parts by mass of the polyol component is used as the crosslinking agent, and no divalent tin catalyst is used.

19. The method of producing a flexible polyurethane foam according to claim 18, wherein, in the step, the first liquid and the second liquid in the composition for forming flexible polyurethane foam according to any one of claims 6 to 11 are mixed and thus the polyol component and the polyisocyanate component are reacted.

## Patentansprüche

1. Polyolzusammensetzung zur Bildung von Polyurethan-Weichschaum (bzw. flexiblem Polyurethanschaum), umfassend eine Polyolkomponente mit einem zahlenmittleren Molekulargewicht von 2.500 oder mehr, einen Katalysator, einen Schaumstabilisator, ein Schäumungsmittel und ein Vernetzungsmittel,
wobei Wasser als Schäumungsmittel enthalten ist,
wobei ein Zuckeralkohol mit einem zahlenmittleren Molekulargewicht von 120 oder mehr und weniger als 2.500 als Vernetzungsmittel enthalten ist,
wobei der Gehalt des Zuckeralkohols, in Bezug auf 100 Masseteile der Polyolkomponente, 0,1 bis 5,0 Masseteile beträgt, und
wobei kein zweiwertiger Zinnkatalysator enthalten ist.

2. Polyolzusammensetzung zur Bildung von Polyurethan-Weichschaum nach Anspruch 1, wobei der Zuckeralkohol einen Monosaccharidalkohol umfasst.

3. Polyolzusammensetzung zur Bildung von Polyurethan-Weichschaum nach Anspruch 2, wobei der Gehalt des Monosaccharidalkohols in Bezug auf die Gesamtmenge des Zuckeralkohols 90 Masse-% oder mehr beträgt.

4. Polyolzusammensetzung zur Bildung von Polyurethan-Weichschaum nach einem der Ansprüche 1 bis 3, wobei die Polyolkomponente einen Polyetherpolyol mit einem Gesamt-Ungesättigtheitsgrad von 0,04 mEq./g oder weniger umfasst.

5. Polyolzusammensetzung zur Bildung von Polyurethan-Weichschaum nach einem der Ansprüche 1 bis 4, die ferner mindestens ein zyklisches Glykol, ausgewählt aus der Gruppe bestehend aus alizyklischen Glykolen und aromatischen Glykolen, als das Vernetzungsmittel enthält.

6. Zusammensetzung zur Bildung von Polyurethan-Weichschaum, umfassend eine erste Flüssigkeit, die aus der Polyolzusammensetzung nach einem der Ansprüche 1 bis 5 aufgebaut ist, und eine zweite Flüssigkeit, die aus einer Isocyanatzusammensetzung aufgebaut ist, die eine Polyisocyanatkomponente umfasst.

7. Zusammensetzung zur Bildung von Polyurethan-Weichschaum nach Anspruch 6, wobei die Polyisocyanatkomponente Diphenylmethandiisocyanat umfasst.

8. Zusammensetzung zur Bildung von Polyurethan-Weichschaum nach Anspruch 7, wobei der Gehalt des Diphenylmethandiisocyanats in Bezug auf die Gesamtmenge der Polyisocyanatkomponente 50 bis 85 Masse-% beträgt.

9. Zusammensetzung zur Herstellung von Polyurethan-Weichschaum nach Anspruch 7 oder 8,
wobei das Diphenylmethandiisocyanat mindestens eines aus 2,2'-Diphenylmethandiisocyanat und 2,4'-Diphenylmethandiisocyanat umfasst, und
wobei eine Gesamtmenge des 2,2'-Diphenylmethandiisocyanats und des 2,4'-Diphenylmethandiisocyanats 10 bis 50 Massen-% in Bezug auf die Gesamtmenge des Diphenylmethandiisocyanats beträgt.

10. Zusammensetzung zur Bildung von Polyurethan-Weichschaum nach einem der Ansprüche 6 bis 9, wobei mindestens eine aus der ersten Flüssigkeit und der zweiten Flüssigkeit ein Antioxidationsmittel auf Phosphitbasis enthält.

11. Zusammensetzung zur Bildung von Polyurethan-Weichschaum nach Anspruch 10, wobei, wenn die erste Flüssigkeit und die zweite Flüssigkeit so gemischt werden, dass der NCO-Index 95 beträgt, der Gehalt des Antioxidationsmittels auf Phosphitbasis in der gemischten Lösung in Bezug auf die Gesamtmenge der gemischten Lösung 50 bis 1.100 Massen-ppm beträgt.

12. Polyurethan-Weichschaum, erhalten durch Umsetzen und Aufschäumen einer gemischten Lösung aus der ersten Flüssigkeit und der zweiten Flüssigkeit in der Zusammensetzung zur Bildung von Polyurethan-Weichschaum nach einem der Ansprüche 6 bis 11.

13. Polyurethan-Weichschaum nach Anspruch 12,
wobei der Polyurethan-Weichschaum eine geformte Komponente ist,
wobei der Polyurethan-Weichschaum einen unteren Teil, der einer oberen Formseite einer Form entspricht, und einen oberen Teil, der einer unteren Formseite der Form entspricht, aufweist,
wobei die Länge von einer Endfläche der oberen Seite zu einer Endfläche der unteren Seite als eine Dicke des Polyurethan-Weichschaums festgelegt ist, und
wobei, wenn zwei Schaumstoffe mit einer Dicke, die 45% der Dicke des Polyurethan-Weichschaums beträgt, durch Schneiden des Polyurethan-Weichschaums an Positionen, an denen die Länge von der Endfläche der oberen Seite in einer Dickenrichtung 45% und 90% der Dicke des flexiblen Polyurethanschaums beträgt, entlang einer Ebene senkrecht zu der Dickenrichtung herausgeschnitten werden und ein Durchschnittswert der 25% Stauchhärten der beiden herausgeschnittenen Schaumstoffe als 100 festgelegt wird, beträgt das Verhältnis der 25% Stauchhärte des Schaumstoffs auf der Oberseite zwischen den beiden Schaumstoffen in Bezug auf den Durchschnittswert 50 bis 85.

14. Polyurethan-Weichschaum nach Anspruch 12 oder 13,
wobei die scheinbare Dichte 30 bis 70 kg/m³ beträgt,
wobei die 25% Stauchhärte eines Schaumstoffprüfkörpers mit einer Haut, hergestellt nach dem in JIS K6400 beschriebenen B-Verfahren, 100 bis 350 N/314 cm² beträgt, und
wobei die Dehnungsrate 100 % oder mehr beträgt.

15. Polyurethan-Weichschaum nach einem der Ansprüche 12 bis 14,
wobei die Rückprallelastizität 45 bis 75 % beträgt.

16. Polyurethan-Weichschaum nach einem der Ansprüche 12 bis 15,
wobei der Druckverformungsrest unter feuchten Bedingungen weniger als 20 % beträgt.

17. Polyurethan-Weichschaum nach einem der Ansprüche 12, 13, 15 und 16,
wobei die 25% Stauchhärte eines Schaumstoffprüfkörpers mit einer Haut, hergestellt nach dem in JIS K6400 beschriebenen B-Verfahren, 100 bis 350 N/314 cm² beträgt.

18. Verfahren zur Herstellung eines Polyurethan-Weichschaums, umfassend einen Schritt des Umsetzens einer Polyolkomponente mit einem zahlenmittleren Molekulargewicht von 2.500 oder mehr und einer Polyisocyanatkomponente in Gegenwart eines Katalysators, eines Schaumstabilisators, eines Schäumungsmittel und eines Vernetzungsmittels, um einen Polyurethan-Weichschaum zu erhalten
wobei in dem Schritt Wasser als Schäumungsmittel verwendet wird, 0,1 bis 5,0 Masseteile eines Zuckeralkohols mit einem zahlenmittleren Molekulargewicht von 120 oder mehr und weniger als 2.500, in Bezug auf 100 Masseteile der Polyolkomponente, als Vernetzungsmittel verwendet werden und kein zweiwertiger Zinnkatalysator verwendet wird.

19. Verfahren zur Herstellung eines Polyurethan-Weichschaums nach Anspruch 18, wobei in dem Schritt die erste Flüssigkeit und die zweite Flüssigkeit in der Zusammensetzung zur Bildung von Polyurethan-Weichschaum nach einem der Ansprüche 6 bis 11 gemischt werden und somit die Polyolkomponente und die Polyisocyanatkomponente umgesetzt werden.

## Revendications

1. Composition de polyol pour former une mousse de polyuréthane souple comprenant un composant de polyol ayant un poids moléculaire moyen en nombre de 2500 ou plus, un catalyseur, un stabilisateur de mousse, un agent moussant et un agent de réticulation,
dans laquelle l'eau est contenue en tant qu'agent moussant,
dans laquelle un alcool de sucre ayant un poids moléculaire moyen en nombre de 120 ou plus et de moins de 2500 est contenu comme agent de réticulation,
dans laquelle la teneur en alcool de sucre par rapport à 100 parties en masse du composant de polyol est de 0,1 à 5,0 parties en masse, et
dans laquelle aucun catalyseur à base d'étain divalent n'est contenu.

2. Composition de polyol pour former une mousse de polyuréthane souple selon la revendication 1, dans laquelle l'alcool de sucre comprend un alcool de monosaccharide.

3. Composition de polyol pour former une mousse de polyuréthane souple selon la revendication 2, dans laquelle la teneur en alcool monosaccharide par rapport à une quantité totale de l'alcool de sucre est de 90 % en masse ou plus.

4. Composition de polyol pour former une mousse de polyuréthane souple selon l'une quelconque des revendications 1 à 3, dans laquelle le composant de polyol comprend un polyol de polyéther ayant un degré d'insaturation total de 0,04 meq./g ou moins.

5. Composition de polyol pour former une mousse de polyuréthane souple selon l'une quelconque des revendications 1 à 4, comprenant en outre au moins un glycol cyclique choisi dans le groupe constitué par les glycols alicycliques et les glycols aromatiques en tant qu'agent de réticulation.

6. Composition pour former une mousse de polyuréthane souple comprenant un premier liquide composé de la composition de polyol selon l'une quelconque des revendications 1 à 5 et un second liquide composé d'une composition d'isocyanate comprenant un composant de polyisocyanate.

7. Composition pour former une mousse de polyuréthane souple selon la revendication 6, dans laquelle le composant de polyisocyanate comprend du diisocyanate de diphénylméthane.

8. Composition pour former une mousse de polyuréthane souple selon la revendication 7, dans laquelle la teneur en diisocyanate de diphénylméthane par rapport à une quantité totale du composant polyisocyanate est de 50 à 85 % en masse.

9. Composition pour former une mousse de polyuréthane souple selon la revendication 7 ou 8,
dans laquelle le diisocyanate de diphénylméthane comprend au moins l'un des diisocyanates de 2,2'-diphénylméthane et de 2,4'-diphénylméthane, et
dans laquelle la quantité totale de diisocyanate de 2,2'-diphénylméthane et de diisocyanate de 2,4'-diphénylméthane est de 10 à 50 % en masse par rapport à la quantité totale de diisocyanate de diphénylméthane.

10. Composition pour former une mousse de polyuréthane souple selon l'une quelconque des revendications 6 à 9, dans laquelle au moins l'un du premier liquide et du second liquide comprend un antioxydant à base de phosphite.

11. Composition pour former une mousse de polyuréthane souple selon la revendication 10, dans laquelle, lorsque le premier liquide et le second liquide sont mélangés de manière à ce qu'un indice NCO soit de 95, la teneur de l'antioxydant à base de phosphite dans la solution mélangée par rapport à une quantité totale de la solution mélangée est de 50 à 1 100 ppm en masse.

12. Mousse de polyuréthane souple obtenue par réaction et moussage d'une solution mélangée du premier liquide et du second liquide dans la composition pour former une mousse de polyuréthane souple selon l'une quelconque des revendications 6 à 11.

13. Mousse de polyuréthane souple selon la revendication 12,
dans laquelle la mousse de polyuréthane souple est un composant moulé,
dans laquelle la mousse de polyuréthane souple a une partie inférieure correspondant à un côté supérieur du moule et une partie supérieure correspondant à un côté inférieur du moule,
dans laquelle la longueur entre une surface d'extrémité du côté supérieur et une surface d'extrémité du côté inférieur est définie comme une épaisseur de la mousse de polyuréthane souple, et
dans laquelle lorsque deux mousses ayant une épaisseur qui est 45% de l'épaisseur de la mousse de polyuréthane souple sont découpées en coupant la mousse de polyuréthane souple aux positions où la longueur à partir de la surface d'extrémité du côté supérieur dans une direction d'épaisseur est 45% et 90% de l'épaisseur de la mousse de polyuréthane souple le long d'un plan perpendiculaire à la direction d'épaisseur, et une valeur moyenne des duretés de compression de 25 % des deux mousses découpées est fixée à 100, le rapport de la dureté de compression de 25 % de la mousse du côté supérieur entre les deux mousses par rapport à la valeur moyenne est de 50 à 85.

14. Mousse de polyuréthane souple selon la revendication 12 ou 13,
dans laquelle la densité apparente est comprise entre 30 et 70 kg/m3,
dans laquelle la dureté à la compression de 25 % d'une éprouvette de mousse avec une peau produite par la méthode B décrite dans la norme JIS K6400 est de 100 à 350 N/314 cm², et
dans laquelle le taux d'allongement est de 100 % ou plus.

15. Mousse de polyuréthane souple selon l'une quelconque des revendications 12 à 14,
dans laquelle la résilience au rebond est de 45 à 75 %.

16. Mousse de polyuréthane souple selon l'une des revendications 12 à 15,
dans laquelle la déformation fixée dans des conditions humides est inférieure à 20 %.

17. Mousse de polyuréthane souple selon l'une quelconque des revendications 12, 13, 15 et 16,
dans laquelle la dureté à la compression de 25 % d'une éprouvette de mousse avec une peau produite par la méthode B décrite dans la norme JIS K6400 est comprise entre 100 et 350 N/314 cm².

18. Procédé de fabrication d'une mousse de polyuréthane souple, comprenant une étape de réaction d'un composant polyol ayant un poids moléculaire moyen en nombre de 2500 ou plus et d'un composant polyisocyanate en présence d'un catalyseur, d'un stabilisateur de mousse, d'un agent moussant et d'un agent de réticulation pour obtenir une mousse de polyuréthane souple,
dans lequel, à l'étape, l'eau est utilisée comme agent moussant, 0,1 à 5,0 parties en masse d'un alcool de sucre ayant un poids moléculaire moyen en nombre de 120 ou plus et inférieur à 2500 par rapport à 100 parties en masse du composant polyol est utilisé comme agent de réticulation, et aucun catalyseur à l'étain divalent n'est utilisé.

19. Procédé de fabrication d'une mousse de polyuréthane souple selon la revendication 18, dans lequel, lors de l'étape, le premier liquide et le second liquide de la composition pour former une mousse de polyuréthane souple selon l'une quelconque des revendications 6 à 11 sont mélangés et ainsi le composant polyol et le composant polyisocyanate réagissent.
